# EUROPÄISCHE PATENTSCHRIFT

(11) **EP 1 929 858 B1**
(45) Veröffentlichungstag und Bekanntmachung des Hinweises auf die Patenterteilung: **10.03.2010**
(21) Anmeldenummer: 07023391.1
(22) Anmeldetag: 04.12.2007
(51) Int. Cl.: A01F 12/30

(54) **Schüttlerhilfsvorrichtung**
Shaker assistance device
Aide de secoueur

(30) Priorität: 04.12.2006 DE 202006018434 U
(43) Veröffentlichungstag der Anmeldung: 11.06.2008
(73) Patentinhaber: Schütte, Thomas, 48488 Emsbüren-Gleesen (DE)
(72) Erfinder: Schütte, Thomas, 48488 Emsbüren-Gleesen (DE)
(74) Vertreter: Michalski, Stefan

(56) Entgegenhaltungen:
- DE-A1- 3 441 238
- DE-C- 176 673
- DE-C- 404 817
- DE-U1-202006 013 623

## Beschreibung

Die Erfindung betrifft eine Schüttlerhilfsvorrichtung zur Befestigung an einem rückwärtigen Ende eines Mähdrescher-Schüttlers, mit wenigstens einem Paar lösbar miteinander verbundener Einspannelemente, zwischen denen mehrere Zinkenelemente einspannbar sind und wobei wenigstens eines der Einspannelemente aus Kunststoff besteht.

Bei einem Mähdrescher gelangt das Erntegut zur Abscheidung, wo die restlichen Körner und nicht vollständig ausgedroschene Ähren vom Stroh getrennt werden. Die Abscheidung erfolgt meist über einen sogenannten Schüttler. Das Stroh folgt den ansteigend verlaufenden Schüttlern während Körner und nicht vollständig ausgedroschene Ähren vom Stroh getrennt werden und durch kleine Löcher in den Schüttlerhorden auf das Reinigungssieb fallen.

Es hat sich gezeigt, dass die Leistungsfähigkeit des Schüttlers die Leistung des Mähdreschers und damit auch dessen Fahrgeschwindigkeit begrenzt. Um die Übergabe des Strohs von einem Schüttler auf den nächsten zu beschleunigen und dabei zugleich mehr Restkorn vom Stroh zu separieren, sind Zinkenelemente vorgeschlagen worden, die - in Transportrichtung gesehen - am Ende des Schüttlers angebracht sind. Diese sind am Schüttler eingespannt und dann an einer Knickstelle nach oben gebogen. In der Praxis hat sich gezeigt, dass aus einem Rundstab gebildete und geknickte Zinkenelemente zur Seite gedreht werden. Um eine Verdrehsicherheit innerhalb der Aufnahme der Zinkenelemente zu bewirken, muss an der Einspannstelle eine formschlüssige Verbindung hergestellt werden, beispielsweise durch Anfeilen des Stabes im Einspannungsbereich oder durch Anschweißen von Zusatzkörpern. Hinzu kommt, dass die Festigkeit des Zinkenelements durch die einmal vorgenommene plastische Verformung an der Knickstelle gemindert ist, sofern die Zinkenelemente nicht durch aufwendige Wärmebehandlungsverfahren nachbehandelt worden sind. Es kommt somit vermehrt zu einem Bruch der Zinkenelemente im Bereich der Knickstelle.

So offenbart DE 3441 238 eine Vorrichtung zur Intensivierung der Körnerabscheidung mit schwingfähigen Lockerungsstäben, die sowohl mehrfach in ihrem Befestigungsbereich, als auch einmalig in ihrem Schwingbereich Knickstellen aufweisen. Die Befestigung der Lockerungsstäbe an der Stufenwand eines Schüttlers erfolgt zwischen einer aufgeschraubten Platte, Schellen, einer Gummibuchse und einem Bügel.

Aufgabe der Erfindung ist es somit, einen Schüttler mit Zinkenelementen so zu verbessern, dass die Zinkenelemente als Verbrauchsartikel kostengünstiger zu fertigen sind und im Betrieb eine größere Standzeit haben. Zudem ist es Aufgabe der vorliegenden Erfindung, die im Betrieb des Schüttlers durch die Rotation der Zinkelemente auftretenden Kräfte nicht über die Einspannelemente auf den Schüttler zu übertragen, ohne dabei jedoch einen dämpfenden Effekt zu erzeugen, der die Rotation der Zinkelemente unterbinden wurde.

Erfindungsgemäß wird hierzu vorgeschlagen, die Zinkenelemente aus einem geraden stabförmigen Halbzeug ohne plastische Verformung herzustellen und sie zwischen zwei Einspannelementen zu befestigen, wobei zwischen den Einspannelementen eine Einspannebene ausgebildet ist, die ausgestaltet ist in einem spitzen Winkel α in Bezug auf die Förderebene (F) des Schüttlers (20) ausgerichtet zu sein, Erfindungsgemäß ist zunächst erkannt worden, die Einspannstellen schräg auszurichten, so dass die Zinkenelemente selbst aus einem stabförmigen Halbzeug, insbesondere aus einem Federstahl mit rundem Querschnitt, hergestellt werden können. Hierzu braucht lediglich die benötigte Länge vom Halbzeug abgelängt zu werden. Da eine plastische Verformung nicht mehr notwendig ist, können entsprechend gehärtete Halbzeuge oder Stähle höherer Festigkeit verwendet werden. Bei der Montage ist keine Ausrichtung der Zinkenelemente mehr notwendig. Da alle Zinkenelemente zwangsweise innerhalb der Einspannebene angeordnet sind, ist ein Rotieren der Zinkenelemente um die Einspannstelle ausgeschlossen. Darüber hinaus ist erfindungsgemäß erkannt worden, dass bei Verwendung von Kunststoff für die Ausbildung wenigstens eines der Einspannelemente, die durch die Rotation der Zinkelemente im Betrieb des Schüttlers auftretenden Kräfte weniger auf den Schüttler übertragen werden, wobei jedoch die gewünschte Rotation der Zinkelemente zur Ubergabe des Strohs von einem Schüttler auf den nächsten nicht unterbunden wird.

Die Einspannelemente sind also vorzugsweise aus einem Werkstoff gebildet, der relativ zum Werkstoff, aus dem die Zinkenelemente gebildet sind, weicher ist. Beispielsweise kann wenigstens eines der Einspannelemente aus einem Kunststoff oder aus Aluminium gebildet sein, so dass durch plastische Verformung an der Einspannstelle eine besonders wirksame Klemmung der Zinkenelemente bewirkt wird und die Rotation der Zinkelemente nicht auf den Schüttler übertragen wird. Die Einspannelemente sind vorzugsweise über Schrauben miteinander verbunden.

Um Durchbiegungen der Einspannelemente über die Breite des Schüttlers zu vermeiden, können Aussteifungsprofile vorgesehen sein, beispielsweise Winkelprofile, die entweder jedes Einspannelement für sich abstützen oder die das Paket aus einem Paar miteinander verschraubter Einspannelemente und den zwischenliegenden Zinkenelementen zweiachsig aussteifen.

Die Erfindung wird mit Bezug auf die Figuren näher erläutert. Die Figuren zeigen:
- Fig. 1: einen Schüttler mit Schüttlerhilfsvorrichtung in seitlicher Ansicht und
- Fig. 2: eine hintere obere Kante des Schüttlers samt Schüttlerhilfsvorrichtung, ebenfalls in seitlicher Ansicht.

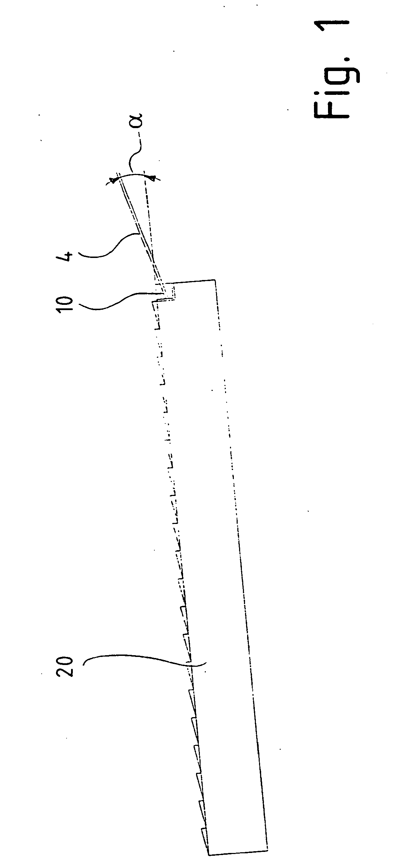

Fig. 1 zeigt exemplarisch ein einzelnes Schüttlerelement 20, von denen im Förderweg eines Mähdreschers mehrere zu sogenannten Horden zusammengefasst und derart angeordnet sind, dass die Schüttlerelemente in Förderrichtung ansteigend ausgerichtet sind und dass beim Übergang von einem Schüttlerelement auf das nächste jeweils ein Versatz in der Höhe vorgesehen ist.

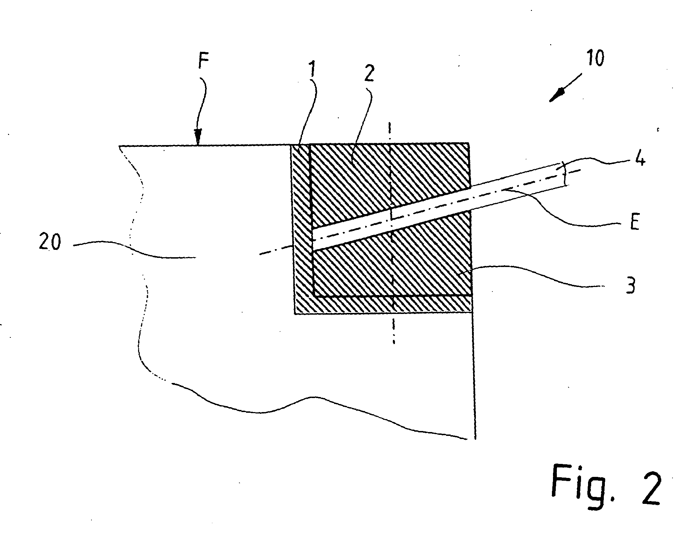

Im Bereich des Höhensprungs sind Zinkenelemente 4 angeordnet, die wesentlicher Bestandteil der Schüttlerhilfsvorrichtung 10 sind. Die Zinkenelemente 4 sind in einer Einspannebene E ausgerichtet, welche in der Seitenansicht, die Fig. 2 zeigt, einen Winkel α mit der Oberseite des Schüttlerelements 20, welche eine Förderebene F bildet, einschließt.

Die Einspannebene E ist zwischen zwei Einspannelementen 2, 3 ausgebildet, welche im dargestellten Ausführungsbeispiel den gleichen Querschnitt besitzen und die in punktsymmetrischer Weise zueinander angeordnet sind, so dass der Block der miteinander verschraubten Einspannelemente 2, 3 wiederum einen Quader umschließt. Durch die Verwendung gleichartiger Einspannelemente 2, 3, ist nur ein Bauteil zu fertigen und als Ersatzteil vorrätig zu halten.

Zwischen den Einspannelementen 2, 3 sind die als Rundstäbe ausgebildeten Zinkenelemente 4 eingespannt. Ein Winkelelement 1 ist im Kantenbereich des Schüttlerelements 20 eingearbeitet und dient der Aufnahme und Abstützung des Pakets aus Einspannelementen 2, 3 mit Zinkenelementen 4. Vorzugsweise sind die in der Zeichnung nicht dargestellten Verschraubungen zwischen den Einspannelementen wenigstens teilweise bis durch das Winkelelement 1 hindurchgeführt, so dass mit der Verbindung der Einspannelemente untereinander zugleich auch die Verbindung mit dem Winkelement vorgenommen wird.

## Patentansprüche

1. Schüttlerhilfsvorrichtung (10) zur Befestigung an einem rückwärtigen Ende eines Mähdrescher-Schüttlers (20), mit wenigstens einem Paar lösbar miteinander verbundener Einspannelemente (2, 3), zwischen denen mehrere Zinkenelemente (4) einspannbar sind und wobei wenigstens eines der Einspannelemente (2, 3) aus Kunststoff besteht, **dadurch gekennzeichnet, dass** die Zinkenelemente (4) aus einem geraden, stabförmigen Halbzeug ohne plastische Verformung hergestellt sind und dass zwischen den Einspannelementen (2, 3) eine Einspannebene (E) ausgebildet ist, die ausgestaltet ist in einem spitzen Winkel α in Bezug auf die Förderebene (F) des Schüttlers (20) ausgerichtet zu sein.

2. Schüttlerhilfsvorrichtung (10) nach Anspruch 1, **dadurch gekennzeichnet, dass** die Einspannebene (E) in einem Winkel α = 15° bis 30° zur Förderebene (F) ausgerichtet ist.

3. Schüttlerhilfsvorrichtung (10) nach Anspruch 1 oder 2, **dadurch gekennzeichnet, dass** wenigstens eines der Einspannelemente (2, 3) aus Aluminium besteht.

4. Schüttlerhilfsvorrichtung (10) nach einem der Ansprüche 1 bis 3, **dadurch gekennzeichnet, dass** die Einspannelemente (2, 3) an einem Winkelelement (1) abgestützt sind.

5. Schüttlerhilfsvorrichtung (10) nach einem der Ansprüche 1 bis 4, **dadurch gekennzeichnet, dass** die Zinkenelemente (4) aus einem Federstahl mit rundem Querschnitt gebildet sind.

6. Schüttlerhilfsvorrichtung (10) nach einem der Ansprüche 1 bis 5, **dadurch gekennzeichnet, dass** beide Einspannelemente (2, 3) gleich ausgebildet sind.

## Claims

1. Auxiliary shaker device (10) to be fastened on a rear end of a combine harvester shaker (20), having at least one pair of detachably interconnected clamping elements (2, 3) between which a plurality of tine elements (4) can be clamped, wherein at least one of the clamping elements (2, 3) consists of plastic,
**characterized in that** the tine elements (4) are produced from a straight, rod-shaped semifinished product without plastic deformation, and **in that** a clamping plane (E) which is configured so as to be oriented at an acute angle α in relation to the conveying plane (F) of the shaker (20) is formed between the clamping elements (2, 3).

2. Auxiliary shaker device (10) according to Claim 1, **characterized in that** the clamping plane (E) is oriented at an angle α = 15° to 30° with respect to the conveying plane (F).

3. Auxiliary shaker device (10) according to Claim 1 or 2, **characterized in that** at least one of the clamping elements (2, 3) consists of aluminium.

4. Auxiliary shaker device (10) according to one of Claims 1 to 3, **characterized in that** the clamping elements (2, 3) are supported on an angle element (1).

5. Auxiliary shaker device (10) according to one of Claims 1 to 4, **characterized in that** the tine elements (4) are formed from spring steel having a round cross section.

6. Auxiliary shaker device (10) according to one of Claims 1 to 5, **characterized in that** the two clamping elements (2, 3) have the same design.

## Revendications

1. Dispositif d'aide au secouage (10) destiné à être fixé à une extrémité arrière d'un secoueur d'une moissonneuse-batteuse (20), comprenant au moins une paire d'éléments de serrage (2, 3) connectés de manière détachable l'un à l'autre, entre lesquels plusieurs éléments de dents (4) peuvent être serrés, et au moins l'un des éléments de serrage (2, 3) se composant de plastique,
**caractérisé en ce que**
les éléments de dents (4) sont fabriqués à partir d'un produit semi-fini en forme de barre droite, sans déformation plastique, et **en ce qu'**entre les éléments de serrage (2, 3) est réalisé un plan de serrage (E) qui est configuré pour être orienté suivant un angle aigu α par rapport au plan d'avance (F) du secoueur (20).

2. Dispositif d'aide au secouage (10) selon la revendication 1, **caractérisé en ce que** le plan de serrage (E) est orienté suivant un angle α de 15° à 30° par rapport au plan d'avance (F).

3. Dispositif d'aide au secouage (10) selon la revendication 1 ou 2, **caractérisé en ce qu'**au moins l'un des éléments de serrage (2, 3) se compose d'aluminium.

4. Dispositif d'aide au secouage (10) selon l'une quelconque des revendications 1 à 3, **caractérisé en ce que** les éléments de serrage (2, 3) sont supportés sur un élément coudé (1).

5. Dispositif d'aide au secouage (10) selon l'une quelconque des revendications 1 à 4, **caractérisé en ce que** les éléments de dents (4) sont formés d'un acier à ressort avec une section transversale ronde.

6. Dispositif d'aide au secouage (10) selon l'une quelconque des revendications 1 à 5, **caractérisé en ce que** les deux éléments de serrage (2, 3) sont réalisés de manière identique.
